Europäisches Patentamt

European Patent Office

Office européen des brevets

(19)

(11) Veröffentlichungsnummer : **0 051 051 B1**

# EUROPÄISCHE PATENTSCHRIFT

(45) Veröffentlichungstag der Patentschrift :
26.06.85

(21) Anmeldenummer : 81850150.4

(22) Anmeldetag : 04.09.81

(51) Int. Cl.⁴ : **B 60 R   9/04, B 60 R   9/08**

(54) **Dachlastenträger für Fahrzeuge.**

(30) Priorität : 09.09.80 DE 3033903

(43) Veröffentlichungstag der Anmeldung :
05.05.82 Patentblatt 82/18

(45) Bekanntmachung des Hinweises auf die Patenterteilung : 26.06.85 Patentblatt 85/26

(84) Benannte Vertragsstaaten :
AT BE CH FR GB IT LI NL SE

(56) Entgegenhaltungen :
DE-A- 1 555 722
DE-A- 1 900 793
DE-C- 2 548 675
DE-U- 7 932 699
US-A- 2 318 971

(73) Patentinhaber : **Industri AB Thule**
**Box 67**
**S-330 33 Hillerstorp (SE)**

(72) Erfinder : **Kimmel, Walter**
**Am Schlossfeld 30**
**D-8950 Kaufbeuren (DE)**

(74) Vertreter : **Linde, Leif**
**Vernamo Patentbyrä AB P.O. Box 1**
**S-270 11 Abbekas (SE)**

## Beschreibung

Die Erfindung bezieht sich auf einen Dachlastenträger für Fahrzeuge mit wenigstens einer Traverse, die sich an beiden Enden am Fahrzeug abstützt und austauschbare und gegen die Traverse verriegelbare Aufnahmen für die Lasten aufweist.

Aus der DE-PS 2 548 675 ist ein Dachlastenträger der oben genannten Art bekannt, bei dem die Aufnahmen in Form von Laststützen ausgebildet sind. Dieselben sind in Ausnehmungen der Traverse einführbar und mit Hilfe einer durch Öffnungen der Laststützen einführbaren Stange verriegelbar. Die Stange wird von den seitlichen Enden der Traverse nach innen eingeführt und besitzt an ihrem freien Ende eine Haube mit welcher sie einen Schliesshebel für die Verankerung des Trägers an der Dachrinne des Fahrzeuges überdeckt.

Für den Austausch der Laststützen wird die Stange herausgezogen, worauf die Laststützen nach oben weggeführt werden und z. B. durch anders geartete Laststützen ersetzt werden können.

Nachteilig ist, dass für das Einführen der Stange nach einem Austausch der Lastträger dieselben in der Traverse sorgfältig angeordnet sein müssen, da ansonsten die Stange nicht zum Verriegeln durch sie durchgeschoben werden kann. Ob die Lastträger richtig angeordnet sind, kann von aussen nicht beobachtet werden, da die Traverse als Vierkantrohr ausgebildet ist und wegen der allseitig geschlossenen Wandung keinen Kontrollblick ermöglicht. Dies ist vor allem dann hinderlich, wenn Schmutz in die für die Laststützen vorgesehenen Öffnungen eingedrungen ist und die saubere Ausrichtung der Laststützen bezüglich der Verriegelungsstange in Frage stellt.

Unvorteilhaft ist auch die Tatsache, dass die Stange zum Entriegeln seitlich zur Fahrzeuglängsachse herausgezogen werden muss. Sie stellt ein Hindernis beim Passieren des Fahrzeugs dar.

Die Laststützen sind, wenn sie nicht an der Traverse angeordnet sind, lose und können als derartige Einzelteile leicht verlegt werden oder verloren gehen.

Auch aus der DE-U1-7 932 699 ist ein Dachlastenträger für Fahrzeuge bekannt, der wenigstens eine Traverse umfasst, die sich an beiden Enden am Fahrzeug abstützt und austauschbare und gegen die Traverse verriegelbare Aufnahmen für die Lasten aufweist. Bei diesem bekannten Dachlastenträger ist jeder Traverse mindestens ein, die Aufnahmen für die Lasten tragender Aufnahmeträger zugeordnet, weisen die Traverse und der Aufnahmeträger formschlüssige Kuppelungselemente für die Verankerung des Aufnahmeträgers an der Traverse auf und ist der Aufnahmeträger auf die Traverse in Richtung seiner Querstreckung aufsetzbar. Nach Aufsetzen des Aufnahmeträgers auf der Traverse muss der Aufnahmeträger dieses vorher bekannten Dachlastenträgers mittels Schrauben oder ähnlichen Befestigungsmittel an der Traverse befestigt werden. Die vorher bekannte Mittel zur Befestigung des Aufnahmeträgers an der Traverse sind dadurch nachteilig, dass sie lose Teilen umfassen, die leicht verlegt werden oder verloren gehen und dass sie nur mit Schwierigkeit den Austausch des Aufnahmeträgers gegen andere Aufnahmeträger erlauben.

Der vorliegenden Erfindung liegt die Aufgabe zugrunde, einen Dachlastenträger der eingangs genannten Art zu schaffen, dessen Aufnahmen schnell und einfach gegen andere Aufnahmen ausgetauscht werden können.

Diese Aufgabe wird erfindungsgemäss dadurch gelöst, dass die Kupplungselemente so ausgebildet sind, dass nach Aufsetzen des Aufnahmeträgers auf der Traverse die Kupplungselemente ineinandergreifen, der Aufnahmeträger durch Verschiebung in Richtung seiner Längserstreckung verriegelt wird und dass der Aufnahmeträger in dieser Verriegeltenlage mittels einer Verriegelungsvorrichtung verriegelbar ist.

Die Traverse stellt quasi den Grundrahmen für den Dachlastenträger dar. Sie ist vornehmlich in ihrer Auszugsweite veränderbar und kann damit an jedem gängigen Fahrzeugtyp angepasst werden. Sofern der Dachlastenträger nur für ein Fahrzeug vorgesehen ist, genügt eine einmalige Anpassung. Der Aufnahmeträger ist in jeder Auszugsstellung der Traverse auf derselben anbringbar. Er gibt die Möglichkeit der Anpassung an den Verwendungszweck. Jeder Aufnamheträger trägt fest angeordnet die ihm zugeordneten Aufnahmen, z. B. Skiklemmen, Surfbretthalter, Kofferhalter, Radhalter usw. Sollen nun statt Skier ein Surfbrett transportiert werden, so genügt es, die Aufnahmeträger zu entriegeln und gegen die anderen Aufnahmeträger auszutauschen, die die gewünschten Aufnahmen für die zu transportierenden Last aufweisen. Die Aufnahmen können an den Aufnahmeträgern aus grundsätzlichen Erwägungen lösbar angeordnet sein, so dass jeder Benutzer sich auf Wunsch seine eigenen, z. B. mit einer Kombination von Aufnahmen bestückte Aufnahmeträger zusammenstellen kann. Die Aufnahmen sind deshalb im Normalfall fest den Aufnahmeträgern zugeordnet und nicht in der Gefahr verloren zu gehen. Auch die Montage ist sehr einfach, da es genügt, die Verriegelung zu lösen, den einen Aufnahmeträger abzunehmen und den anderen aufzusetzen, worauf wieder verriegelt werden kann.

Günstig ist es dabei, wenn der Aufnahmeträger als die Traverse übergreifende U-Profilschiene ausgebildet ist. Die U-Schiene kann auf die Traverse einfach von oben oder von einer der Seiten aufgesetzt und dann verankert werden. Sie bildet wegen des U-Querschnitts selbst eine stabile Einheit und verstärkt in der verriegelten Stellung auch die Stabilität der Traverse. Je nach dem, welche Aufnahme auf den Trägern vorgesehen sind, kann die U-Profilschiene stärker oder schwächer ausgebildet werden.

Eine einfache gegenseitige Verriegelung zwischen der Traverse und den Aufnahmeträgern ergibt sich dann, wenn die Traverse quer zu ihrer Längserstreckung abstehende Stifte aufweist, denen an der U-Profilschiene Kopplungsöffnungen zugeordnet sind. Es genügt, die U-Profilschiene so auf die Traverse aufzusetzen, dass die Stifte in die Öffnungen eintreten um dann den Aufnahmeträger zu verriegeln. Die Stifte können lösbar oder fest an der Traverse angeordnet sein. Es ist auch denkbar, sie an einer, zwei oder mehreren Seiten der Traverse abstehen zu lassen.

Um ein Verschieben des Aufnahmeträgers zu seiner Verriegelung zu ermöglichen, ist bei einer günstigen Weiterbildung der Erfindung vorgesehen, jede Kopplungsöffnung als ein in Längsrichtung der U-Profilschiene ausgerichtetes Langloch auszubilden. Jedes dieser Langlöcher kann eine Einführöffnung zu Einführen des ihm zugeordneten Stiftes aufweisen. Beim Aufsetzen des Aufnahmeträgers auf die Traverse ist dann darauf zu achten, daß die Einführöffnungen mit den Stiften ausgerichtet sind, worauf der Aufnahmeträger auf die Traverse abgesetzt werden kann. Zum Verriegeln genügt es dann, den Aufnahmeträger auf der Traverse in Richtung der Längserstreckung dieser beiden Teile zu verschieben, wodurch der eingangs erwähnte formschlüssige Verschluß erfolgt.

Im Hinblick auf die Fertigung des Dachlastenträgers ist es günstig, wenn die Traverse als nach unten offene U-Profilschiene ausgebildet ist. Das offene U-Profil besitzt einen stabilen Querschnitt.

Eine vorteilhafte Weiterbildung der Erfindung besteht auch darin, daß jedem Aufnahmeträger ein Verriegelungshebel zugeordnet ist, der an der Traverse verschwenkbar gelagert ist und in seiner Offenstellung die Entfernung und den Austausch des Aufnahmeträgers ermöglicht, während er in seiner Schließstellung mit einem Riegelnocken den Aufnahmeträger auf der Traverse gekoppelt verriegelt. Der Verriegelungshebel ist dabei günstigerweise als zweiarmiger Hebel ausgebildet, wobei der eine Hebel die Handhabe und der andere den Riegelnocken bildet. Die beiden Arme des Hebels liegen einander bezüglich der Schwenkachse gegenüber, können jedoch zueinander einen geringeren Winkel als 180° aufweisen. Der Verriegelungshebel verschiebt nach dem Einsetzen eines Aufnahmeträgers auf der Traverse bei seiner Bewegung aus der Offenstellung in die Schließstellung den Träger so weit, bis die Kopplungselemente in Formschluß geraten. Der Verriegelungshebel kann ein Schloß aufweisen, mit welchem er in seiner Schließstellung abgeschlossen werden kann.

Nachfolgend ist ein Ausführungsbeispiel der Erfindung anhand einer Zeichnung beschrieben.

Figur 1 zeigt eine Seitenansicht eines Dachlastenträgers gemäß der Erfindung mit einer Traverse und einem Aufnahmeträger, und

Figur 2 einen Querschnitt durch die Anordnung von Fig. 1, wobei allerdings der Aufnahmeträger auf der Traverse aufgesetzt gezeigt ist.

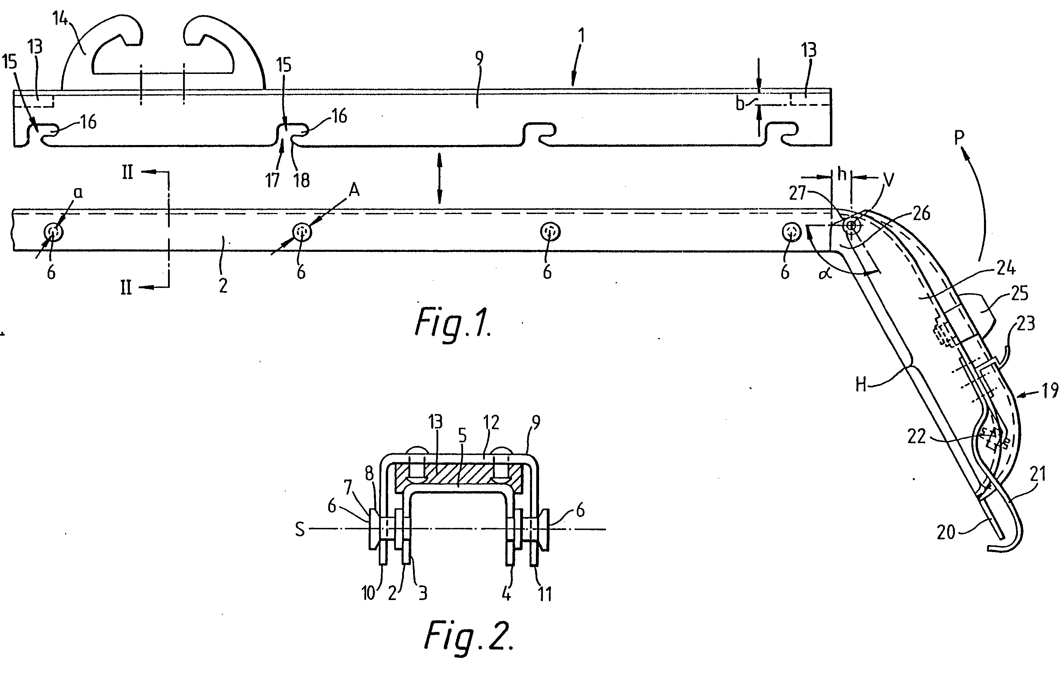

In Fig. 1 ist ein Dachlastenträger 1 für Fahrzeuge, vornehmlich Kraftfahrzeuge gezeigt. Die Zeichnung umfaßt lediglich die rechte Hälfte des Lastenträgers, die linke Hälfte ist spiegelbildlich ausgebildet und aus Gründen der Übersichtlichkeit weggelassen. Der Lastenträger weist eine Traverse 2 auf, die aus einer nach unten offenen U-Profilschiene besteht. Dies bedeutet, daß die U-Schenkeln 3 und 4 vertikal angeordnet sind, während der U-Verbindungsschenkel 5 horizontal angeordnet ist. Die Traverse ist üblicherweise waagrecht auf dem Dach eines Fahrzeuges angeordnet und quer zur Fahrzeuglängsrichtung ausgerichtet. Sie ist im vorliegenden Fall in ihrer Länge nicht veränderbar und besitzt über ihre Gesamtlänge insgesamt 16 quer zu ihrer Längserstreckung abstehende Stifte 6 als Kopplungselemente. Je acht Stifte sind in dem U-Schenkel 3 und die anderen in dem U-Schenkel 4 befestigt. Sie sind quer zur Längserstreckung der Traverse ausgerichtet und jeweils so paarweise angeordnet, daß sie auf einer gemeinsamen Stiftachse S liegen. Jeder Stift ist rotationsachsensymmetrisch aufgebaut und besitzt einen gegenüber dem Stiftdurchmesser a verbreiteten Kopf 7 mit dem Durchmesser A. Der Kopf besitzt eine zur Stiftbefestigung hin abfallende konische Zentrierfläche 8.

Über der Traverse 2 ist ein Aufnahmeträger 9 gezeigt. Wie Fig. 2 entnommen werden kann, ist auch der Aufnahmeträger als nach unten offene U-Profilschiene mit ungefähr gleicher Wandstärke wie die Traverse ausgebildet. Die beiden vertikalen U-Schenkel tragen die Bezugszeichen 10 und 11, während der horizontale Verbindungsschenkel die Bezugsziffer 12 zeigt. Um eine direkte Auflage des Aufnahmeträgers 9 auf der Traverse zu verhindern, sind Distanzstücke 13 vorgesehen, die an den Aufnahmeträger angenietet sind, und ihm um ein Maß b über der Traverse halten. Der Aufnahmeträger besitzt Aufnahmen für die vom Dachlastenträger zu übernehmende Lasten, z. B. Skiklipse 14. Als Aufnahmen kommen aber auch andere Halter in Frage, z. B. Surfbretthalter, Rohr-Stangen-Halter usw. Die Halter sind fest oder lösbar mit dem Aufnahmeträger verbunden.

In den vertikalen Schenkeln 10 und 11 des Aufnahmeträgers sind als Kopplungselemente Kopplungsöffnungen 15 vorhanden, die das Gegenstück zu den als Stifte ausgebildeten Kopplungselementen 6 darstellen. Jede Kopplungsöffnung weist ein in Längserstreckung des Aufnahmeträgers ausgerichtetes Langloch 16 auf, an dessen einem Ende eine Einführöffnung 17 Einführen des ihm zugeordneten Stiftes mündet. Die Einführöffnung schafft eine offene Verbindung zwischen dem Langloch und dem freien Rand der U-Schenkel 10 und 11 und besitzt wenigstens an der einen Seite eine Anlaufschräge 18.

Aus Fig. 2 ist zu erkennen, daß die Kopplungsöffnungen 15 so angeordnet sind, daß bei einem auf die Traverse aufgesetzten Aufnahmeträger die Stifte 6 satt in das Langloch 16 hineinpassen und der Aufnahmeträger nach seinem Aufsetzen auf die Traverse so in Richtung seiner Längserstreckung verschoben werden kann, daß die Stifte in das hintere Ende des Langloches 16 zu liegen kommen. Im gezeigten Fall kann deshalb der Aufnahmeträger 9 nach seinem Aufsetzen auf die Traverse 2 und dem Einführen der Stifte 6 durch die Einführöffnungen 17 in die Langlöcher 16 nach links verschoben werden. Durch das Eindringen der Stifte in die fanghakenartige Kopplungsöffnungen 15 wird eine Kopplung zwischen dem Aufnahmeträger 9 und der Traverse 2 geschaffen, die nur einen Freiheitsgrad zum Öffnen der Koppelung offen läßt, wie dies später noch erläutert wird. Ansonsten sind die beiden Teile nach allen übrigen Richtungen hin gegenseitig festgelegt.

Aus Fig. 2 ist die Zuordnung des Aufnahmeträgers zu der Traverse erkennbar. Die Stifte 6 stehen seitlich mit ihrem Kopf 7 so weit ab, daß die vertikalen U-Schenkel 10 und 11 des Aufnahmeträgers 9 noch jeweils innerhalb der Köpfe 7 zu liegen kommen. Die konischen Schrägflächen 8 erleichtern das Einführen des Aufnahmeträgers auf die Stifte 6. Die Stifte 6 und die Distanzstücke 13 schaffen auch eine seitliche Festlegung des Aufnahmeträgers auf der Traverse.

Die Traverse besitzt an beiden freien Enden eine Haltebügel 19, der die Verbindung zwischen der Traverse 2 und der Dachrinne des Fahrzeugs herstellt. Der Bügel besitzt ein unteres freies Ende 20, mit dem er in der Dachrinne aufsetzt und die Traverse trägt. An ihm ist ein Klemmbügel 21 ortsveränderlich gehalten, der bei einem montierten Dachlastenträger die Dachrinne von unten untergreifen und zwischen sich und dem Ende 20 des Bügels klemmen soll. Zum Einstellen des Klemmbügels ist eine Verstellschraube 22 vorgesehen. An dem Bügel 19 ist darüber hinaus eine Schnappfeder 23 für einen Verriegelungshebel 24 vorhanden. Der Verriegelungshebel ist um eine waagrechte, zu den Achsen der Stifte 6 parallele Schwenkachse V aus einer Offenstellung in die gezeigte Schließstellung verschwenkbar. Der Verriegelungshebel ist in der Form einer länglichen Abdeckhaube ausgebildet und übergreift in der Schließstellung den Bügel 19, die Stellschraube 22, einen Großteil des Endes des Bügels 20 und des Klemmbügels 21.

Er trägt ein Schloss 25, mit Hilfe dessen er am Bügel 19 festgelegt werden kann. Die Schnappfeder 23 greift in eine nicht gezeigte Öffnung desselben ein und schafft eine Vorverriegelung. Aus Fig. 1 ist zu erkennen, dass die Schwenkachse V an der Verbindungsstelle der Traverse 2 mit dem Bügel 19 angeordnet ist. Der Verriegelungshebel ist als zweiarmiger Hebel ausgebildet, wobei der eine Hebel H die Handhabe bildet, während der andere (h) einen Riegelnocken (26) für die Verriegelung des Aufnahmeträgers 9 auf der Traverse 2 bildet. Die beiden Arme schliessen ungefähr einen Winkel von $\alpha = 115°$ ein. Die Riegelnocke 26 ist mit dem Hebelarm h so ausgebildet, dass bei vollständig auf der Traverse aufgesetztem Aufnahmeträger derselbe im wesentlichen spielfrei auf der Traverse verankert ist. Im vorliegenden Fall bedeutet dies, dass die in Fig. 1 angegebenen Achskreuze der Stifte 6 und der Aufnahmeöffnungen 15 sich dabei decken.

Um die Verriegelung zu lösen, kann der Verriegelungshebel 24 in Richtung des Pfeiles P nach oben verschwenkt werden, worauf der Riegelnocken 26 nach unten zurückgeschwenkt wird und dem Aufnahmeträger eine im wesentlichen gerade Riegelseite 27 gegenüberliegt, deren Abstand zu der Achse V nur einen Bruchteil des Hebelarmes h darstellt und deshalb dem Aufnahmeträger 9 die notwendige Freiheit zu einer Verschiebung nach rechts und zum Hochheben und zum Herauslösen desselben aus der Verankerung mit den Stiften 6 gibt.

Die Erfindung ist nicht auf das gezeigte Ausführungsbeispiel beschränkt.

**Patentansprüche**

1. Dachlastenträger für Fahrzeuge mit wenigstens einer Traverse (2), die sich an beiden Enden am Fahrzeug abstützt und austauschbare und gegen die Traverse Verriegelbare Aufnahmen (14) für die Lasten aufweist, wobei jeder Traverse mindestens ein, die Aufnahmen für die Lasten tragender Aufnahmeträger (9) zugeordnet ist, die Traverse (2) und der Aufnahmeträger formschlüssige Kupplungselemente (6, 15) für die Verankerung des Aufnahmeträgers an der Traverse aufweisen und der Aufnahmeträger (9) auf die Traverse (2) in Richtung seiner Quererstreckung aufsetzbar ist, dadurch gekennzeichnet, dass die Kupplungselemente (5, 15) so ausgebildet sind, dass nach Aufsetzen des Aufnahmeträgers auf der Traverse die Kupplungselemente ineinandergreifen, der Aufnamheträger durch Verschiebung in Richtung seiner Längserstreckung verriegelt wird, und dass der Aufnahmeträger in dieser Verriegeltenlage mittels einer Verriegelungsvorrichtung (24) verriegelbar ist.

2. Träger nach Anspruch 1, dadurch gekennzeichnet, dass der Aufnahmeträger (9) als die Traverse (2) übergreifende U-Profilschiene ausgebildet ist.

3. Träger nach Anspruch 1 oder 2, dadurch gekennzeichnet, dass die Traverse (2) quer zu ihrer Längserstreckung abstehende Stifte (6) aufweist, denen an der U-Profilschiene (9) Kopplungsöffnung (15) zugeordnet sind.

4. Träger nach Anspruch 3, dadurch gekennzeichnet, dass jede Kopplungsöffnung (15) als ein Längerstreckung der U-Profilschiene (9) ausgerichtetes Langloch (16) ausgebildet ist.

5. Träger nach Anspruch 4, dadurch gekennzeichnet, dass jedes Langloch (16) eine Einführöffnung (17) zum einführen des ihm zugeordneten Stiftes (6) aufweist.

6. Träger nach wenigstens einem der Ansprüche 1 bis 5, dadurch gekennzeichnet, dass die Traverse (2) nach unten offene U-Profilschiene (9) ausgebildet ist.

7. Träger nach Anspruch 6, dadurch gekennzeichnet, dass die Stifte (6) fest in den U-Schenkeln (3, 4) der Traverse (2) befestigt sind.

8. Träger nach wenigstens einem der Ansprüche 1 bis 7, dadurch gekennzeichnet, dass die Verriegelungsvorrichtung als ein Verriegelungshebel (24) ausgebildet ist, der an der Traverse (2) verschwenkbar gelagert ist und in seiner Offenstellung die Entfernung und den Austausch den Aufnahmeträgers (9) ermöglicht, während er in seiner Schliesstellung mit einem Riegelnocken (26) den Aufnahmeträger (9) auf der Traverse (2) gekoppelt verriegelt.

9. Träger nach Anspruch 8, dadurch gekennzeichnet, dass der Verriegelungshebel (24) als zweiarmiger Hebel (h, H) ausgebildet ist, wobei der eine Hebel (H) die Handhabe und der andere den Riegelnocken (26) bildet.

10. Träger nach wenigstens einem der Ansprüche 8 und 9, dadurch gekennzeichnet, dass der Verriegelungshebel (24) um eine zu den Stiften (6) parallele Schwenkachse (V) verschwenkbar gelagert ist.

11. Träger nach wenigstens einem der Ansprüche 8, 9 oder 10, dadurch gekennzeichnet, dass der Verriegelungshebel an einem Endbereich der Traverse angeordnet ist und der Riegelnocken (26) von der Schwenkachse (V) gesehen zur Traversenmitte hin auskragt.

## Claims

1. A car-roof load carrier comprising at least one transverse member (2), which rests on the vehicle at its both ends and comprises replacable and in relation to the transverse member lockable retainers (14) for the loads, wherein at least one· retainer carrier (9) which carries the retainers for the loads is connected with each transverse member, the transverse member (2) and the retainer carrier comprise interengaging coupling elements (6, 15) for securing the retainer carrier to the transverse member and the retainer carrier (9) is positionable on the transverse member (2) by displacement in its transversal direction, characterized in that the coupling elements (6, 15) are constructed so that after the retainer carrier has been positioned on the transverse member the coupling elements engage each other, the retainer carrier is locked by displacement in its longitudinal direction and the retainer carrier is lockable in this locked position by means of a locking device (24).

2. A carrier according to claim 1, characterized in that the retainer carrier (9) is shaped as a channel bar covering the transverse member (2).

3. A carrier as claimed in claim 1 or 2, characterized in that the transverse member (2) is provided with pins (6) projecting transversely in relation to the longitudinal direction thereof, the pins being adapted to cooperate with coupling openings (15) in the channel bar (9).

4. A carrier as claimed in claim 3, characterized in that each coupling opening (15) is formed as a slot (16) extending in the longitudinal direction of the channel bar (9).

5. A carrier as claimed in claim 4, characterized in that each slot (16) comprises an entrance opening (17) for the insertion of the pin (6) belonging thereto.

6. A carrier as claimed in at least one of claims 1-5, characterized in that the transverse member (2) is shaped as a downwardly open channel bar (9).

7. A carrier as claimed in claim 6, characterized in that the pins (6) are fixedly connected with the flanges (3, 4) of the transverse member (2).

8. A carrier as claimed in at least one of claims 1-7, characterized in that the locking device is formed as a locking lever (24), which is pivotably connected with the transverse member (2) and in its open position allows the removal of the retainer carrier (9) while locking the retainer carrier (9) in its coupled position on the transverse member by means of a locking ridge (26) in its closed position.

9. A carrier as claimed in claim 8, characterized in that the locking lever (24) is shaped as a two-arm lever (h, H) whereby one of the levers (H) constitute the handle and the other constitute the locking ridge (26).

10. A carrier as claimed in at least one of claims 8 and 9, characterized in that the locking lever (24) is pivotably journalled on a pivot axis (V) which is parallel with the pins (6).

11. A carrier as claimed in at least one of claims 1-11, characterized in that the locking lever is positioned at an end portion of the transverse member and displaces the locking ridge (26) in the direction of the centre of the transverse member seen from the pivot axis (V).

## Revendications

1. Galerie pour véhicules comportant au moins une traverse (2) qui prend appui aux deux extrémités sur le véhicule et comprend pour les charges des dispositifs de fixation (14) interchangeables et verrouillables par rapport à traverse, à chaque traverse étant associé au moins un porte-bagages (9) portant les dispositifs de fixation pour les charges, la traverse (2) et le porte-bagages comportant des éléments d'accouplement (6, 15) par encliquetage pour l'ancrage du porte-bagages sur la traverse et le porte-bages (9) pouvant être posé sur la traverse dans le sens de sa largeur, caractérisée par le fait que les éléments d'accouplement (5, 15) sont réalisés de façon qu'après la pose du porte-bagages sur la traverse, les éléments d'accouplement s'engagent les uns dans les autres, que le porte-bagages soit fixé par déplacement dans le sens de sa longueur et que le porte-bagages puisse être bloqué dans cette position au moyen d'un dispositif de verrouillage (24).

2. Galerie selon la revendication 1, caractérisée par le fait que le porte-bagages (9) est réalisé sous la forme d'une barre profilée en U coiffant la traverse (2).

3. Galerie selon la revendication 1 ou 2, caractérisée par le fait que la traverse (2) comporte des chevilles (6) faisant saillie transversalement à son sens longitudinal et auxquelles sont associés des perçages d'accouplement (15) prévus sur la barre profilée en U (9).

4. Galerie selon la revendication 3, caractérisée par le fait que chaque perçage d'accouplement (15) est réalisé sous la forme d'un trou oblong (16) dirigé dans le sens de la longueur de la barre profilée en U (9).

5. Galerie selon la revendication 4, caractérisée par le fait que chaque trou oblong (16) comporte une ouverture d'engagement (17) pour l'introduction de la cheville (6) qui lui est associée.

6. Galerie selon au moins l'une des revendications 1 à 5, caractérisée par le fait que la traverse (2) est réalisée sous la forme d'une barre profilée en U (9) ouverte vers le bas.

7. Galerie selon la revendication 6, caractérisée par le fait que les chevilles (6) sont solidement fixées dans les branches (3, 4) de la traverse (2) en forme d'U.

8. Galerie selon au moins l'une des revendications 1 à 7, caractérisée par le fait que le dispositif de verrouillage est réalisé sous la forme d'un levier de verrouillage (24) qui est monté pivotable sur la traverse (2) et permet, à sa position d'ouverture, l'enlèvement et l'échange du porte-bagages (9), tandis qu'à sa position de fermeture, il verrouille par une came de verrouillage (26) le porte-bagages (9) sur la traverse (8).

9. Galerie selon la revendication 8, caractérisée par le fait que le levier de verrouillage (24) est réalisé sous la forme d'un levier à deux bras (h, H), l'un des leviers (H) formant l'organe de manœuvre et l'autre la came de verrouillage (26).

10. Galerie selon au moins l'une des revendications 8 et 9, caractérisée par le fait que le levier de verrouillage (24) est monté pivotable autour d'un axe de pivotement (V) parallèle aux chevilles (6).

11. Galerie selon au moins l'une des revendications 8, 9 ou 10, caractérisée par le fait que le levier de verrouillage est disposé sur une zone d'extrémité de la traverse et que la came de verrouillage (26) fait saillie en direction du milieu de la traverse vu à partir de l'axe de pivotement (V).

Fig.1.

Fig.2.

0 051 051